# EUROPEAN PATENT APPLICATION

(11) **EP 2 154 665 A2**
(43) Date of publication of application: **17.02.2010**
(21) Application number: 09167420.0
(22) Date of filing: 06.08.2009
(51) Int. Cl.: G08G 5/02, G06K 9/00

(54) **Automated landing area detection for aircraft**

(30) Priority: 14.08.2008 US 191491
(71) Applicant: Honeywell International Inc., Morristown, NJ 07962 (US)
(72) Inventor: Feyereisen, Thea L., Morristown, NJ 07962-2245 (US); Wyatt, Ivan S., Morristown, NJ 07962-2245 (US); He, Gang, Morristown, NJ 07962-2245 (US)
(74) Representative: Buckley, Guy Julian

(57) **Abstract**

A system for detecting a landing area or runway for an aircraft includes a detection subsystem, a processor architecture, flight deck instrumentation, and a runway feature template database. The system is operated to perform an automated method for visually confirming the presence of a runway on approach. The method obtains sensor data indicative of an approach area of the aircraft, and extracts visually distinguishable features of the approach area from the sensor data. The method also accesses the runway feature template corresponding to the intended approach runway for the aircraft, fits the visually distinguishable features to the runway feature template, and provides flight crew feedback in response to the fitting step.

## Description

### TECHNICAL FIELD

Embodiments of the subject matter described herein relate generally to avionics systems and instrumentation. More particularly, embodiments of the subject matter relate to the automated detection of the landing area for an aircraft.

### BACKGROUND

Aircraft such as airplanes, helicopters, and spacecraft may be required to perform approach and landing operations under low visibility conditions, which may be caused by weather or other environmental phenomena. Safely landing the aircraft requires accurate information about the location of a target (e.g., runway). During an approach to a runway, the pilot must carefully control the navigation of the aircraft relative to a touchdown point. Pilots need to have a good situational awareness of the outside world through heavy fog, smoke, snow, dust, or sand, to detect runways and obstacles on runways and/or in the approach path for a safe landing. Low visibility approach and landing operations typically rely on a combination of avionics equipment, surface infrastructure, and flight crew training. Unfortunately, these requirements restrict low visibility approaches to a relatively low number of runways.

Current aviation regulations require a pilot to visually detect the runway environment (looking out the windows of the aircraft) before the aircraft can descend below a certain altitude or "decision height." For example, current Federal Aviation Administration (FAA) regulations for Category I Instrument Landing System (ILS) approaches mandate a 200-foot decision height whereby a pilot must have visual confirmation of the runway during the final 200 feet on approach. Alternatively, a pilot may utilize an enhanced vision system (EVS) and a head-up display to descend to an altitude of 100 feet.

There remains a need to supplement and enhance visual detection of a runway or landing area under limited or no visibility conditions. It would be desirable to improve operational performance, and lower operating costs, by increasing the availability of low visibility approaches to more runways without the need for expensive lighting, ground infrastructure, facilities maintenance costs, etc.

### BRIEF SUMMARY

A method for detecting a landing area for an aircraft is provided. The method obtains sensor data indicative of an approach area of the aircraft, extracts visually distinguishable features of the approach area from the sensor data, and compares characteristics of the visually distinguishable features to one or more environment features associated with a desired landing area for the aircraft. In addition, flight crew feedback is provided, where such feedback is based upon the comparison.

The above and other aspects may be carried out by an embodiment of a system for detecting a landing area for an aircraft. The system includes an onboard detection subsystem configured to obtain sensor data indicative of an approach area of the aircraft, a processor architecture coupled to the onboard detection subsystem, and a flight deck instrument coupled to the processor architecture. The processor architecture is configured to receive the sensor data, extract visually distinguishable features of the approach area from the sensor data, and fit the visually distinguishable features to a runway feature template. The flight deck instrument is configured to generate feedback that is influenced by the extent of matching of the visually distinguishable features to the runway feature template.

An automated method for visually confirming a landing area for an aircraft is also provided. The automated method involves the steps of obtaining sensor data indicative of an approach area of the aircraft, extracting visually distinguishable features of the approach area from the sensor data, and accessing a runway feature template corresponding to an intended approach runway for the aircraft. The automated method fits the visually distinguishable features to the runway feature template, and provides flight crew feedback in response to the fitting step.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 is a schematic block diagram representation of an embodiment of a system for detecting a landing area for an aircraft;

FIGS. 2-4 are simplified diagrams that depict different runways from the perspective of an approaching aircraft; and

FIG. 5 is a flow chart that illustrates an embodiment of an automated landing area detection process.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

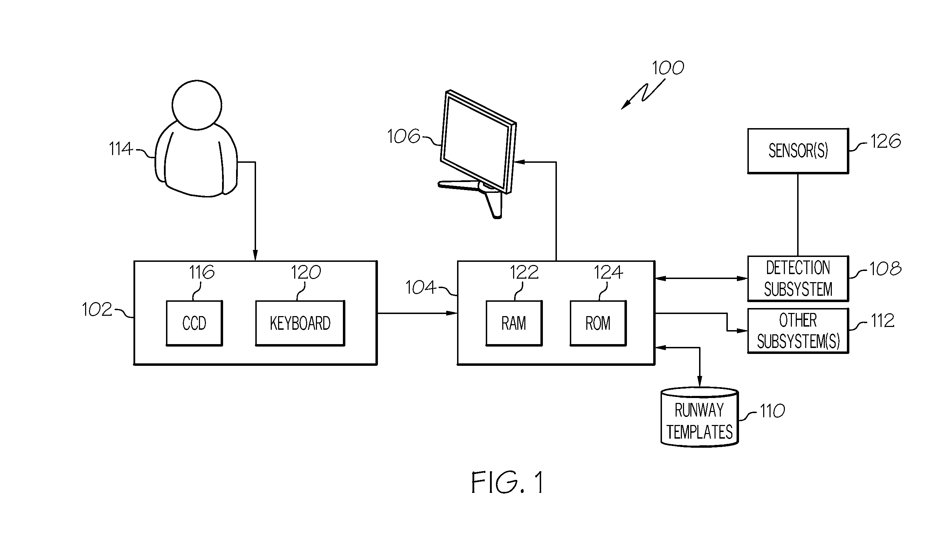

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the schematic shown in FIG. 1 depicts one exemplary arrangement of elements, additional intervening elements, devices, features, or components may be present in an embodiment of the depicted subject matter.

The systems and methods described here leverage automated computer-enhanced vision detection techniques for use as a replacement of (or supplement to) the human eyes during approach. Such computer-enhanced systems and methods can be utilized to detect certain characteristics, features, and/or elements of the runway environment under low or zero visibility conditions. As explained in more detail below, a detection subsystem obtains sensor data that is indicative of the runway or landing area environment, and that sensor data is analyzed to extract features of interest. Any number of custom, blended, or known techniques can be exploited to complete the feature extraction. Runway environment features that might be automatically extracted and exploited include, without limitation: runway edges; approach lighting fixtures; runway markings; landscaping; buildings or other structures; and the like. Various feature extraction and characterization techniques and algorithms may be employed, such as, without limitation: vertex based template matching; active edge analysis; edge fitting; modified hough; etc.

FIG. 1 is a schematic block diagram representation of an embodiment of a system 100 for detecting a landing area for an aircraft. System 100 is preferably deployed as an onboard system on the host aircraft, which may be an airplane, a spacecraft, an airship, a helicopter, a glider, or the like. For the sake of brevity, conventional techniques related to avionics instrumentation, graphics processing and rendering, positioning/locationing systems, detection (e.g., radar) systems, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

FIG. 1 depicts an exemplary system 100 that generally includes, without limitation: a user interface 102; a processor architecture 104 coupled to user interface 102; a flight deck instrument 106 coupled to processor architecture 104; and a detection subsystem coupled to processor architecture 104. System 100 may also include, cooperate with, and/or communicate with a number of databases, sources of data, or the like, including a template database 110. Moreover, system 100 may include, cooperate with, and/or communicate with a number of other subsystems 112. For example, processor architecture 104 may cooperate with one or more of the following components, features, data sources, and subsystems, without limitation: a terrain database; a navigation database; a positioning subsystem, such as a global positioning system (GPS); a navigation computer; a runway awareness and advisory system (RAAS); an instrument landing system (ILS); a flight director; a terrain avoidance and warning system (TAWS); a traffic and collision avoidance system (TCAS); one or more inertial sensors; and one or more terrain sensors.

User interface 102 is in operable communication with processor architecture 104 and is configured to receive input from a user 114 (e.g., a pilot) and, in response to the user input, supply command signals to processor architecture 104. User interface 102 may be any one, or combination, of various known user interface devices including, but not limited to, a cursor control device (CCD) 116, such as a mouse, a trackball, or joystick, one or more buttons, switches, or knobs. In the depicted embodiment, user interface 102 includes CCD 116 and a keyboard 118. The user 114 manipulates CCD 116 to, among other things, move cursor symbols that might be rendered at various times on flight deck instrument 106, and the user 114 may manipulate keyboard 118 to, among other things, input textual data.

Processor architecture 104 may utilize one or more known general-purpose microprocessors or an application specific processor that operates in response to program instructions. In the depicted embodiment, processor architecture 104 includes or communicates with onboard RAM (random access memory) 122, and onboard ROM (read only memory) 124. The program instructions that control processor architecture 104 may be stored in either or both RAM 122 and ROM 124. For example, the operating system software may be stored in ROM 124, whereas various operating mode software routines and various operational parameters may be stored in RAM 122. It will be appreciated that this is merely exemplary of one scheme for storing operating system software and software routines, and that various other storage schemes may be implemented. It will also be appreciated that processor architecture 104 may be implemented using various other circuits, not just a programmable processor. For example, digital logic circuits and analog signal processing circuits could also be used.

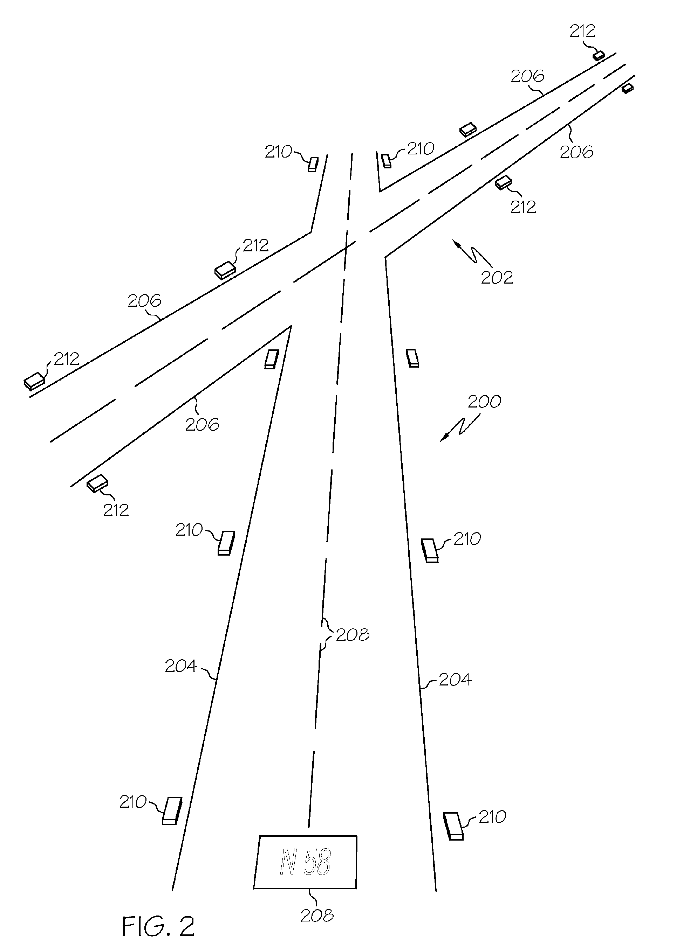

Processor architecture 104 is in operable communication with detection subsystem 108, template database 110, and other subsystems 112 to receive various types of data, information, commands, signals, etc., from the various sensors, data sources, instruments, and subsystems described herein. For example, processor architecture 104 is suitably configured to obtain and process sensor data gathered by one or more sensors 126 of detection subsystem 108, in the manner described in more detail below.
Moreover, processor architecture 104 is suitably configured to support or perform the various operations, methods, tasks, processes, and procedures described below with reference to FIGS. 2-5.

Flight deck instrument 106 may be realized with any number of components, such as display elements, indicator lights, audio speakers, or the like. Flight deck instrument 106 may include a display element that is used to display various images and data, in both a graphical and a textual format, and to supply visual feedback to the user 114 in response to the user input commands supplied by the user 114 to user interface 102. In an exemplary embodiment, flight deck instrument 106 is suitably configured to generate feedback (audio, visual, tactile, etc.) to the flight crew, where such feedback is associated with the automated landing area detection schemes described herein. For example, such feedback may be conveyed as a clear-to-proceed, do-not-proceed, or warning indicator during approach.

Template database 110 preferably contains a plurality of runway feature templates, where each template corresponds to a different runway. A runway feature template defines or includes data associated with certain detectable characteristics of the respective runway. Thus, system 100 can compare collected sensor data, which conveys actually detected characteristics of the runway, against the corresponding characteristics defined by the runway feature template. Alternatively or additionally, template database 110 may contain a generic runway feature template that defines, indicates, or includes generic characteristics shared among all runways. The data in template database 110 can be pre-loaded by external data sources or provided in real-time by other subsystems 112.

Although FIG. 1 depicts template database 110 as a distinct component relative to processor architecture 104, all or portions of template database 110 could be loaded into the onboard RAM 122, stored in ROM 124, or integrally formed as part of processor architecture 104. Template database 110 could also be part of a device or system that is physically separate from system 100.

Detection subsystem 108 obtains sensor data using one or more sensors 126. This sensor data is indicative of an approach area of the aircraft. In other words, the sensor data includes information associated with detectable, visible, or discernable features, characteristics, or elements within the approach area. For example, the sensor data may be indicative of visually distinguishable features of a runway, airstrip, or airport. Depending upon the specific implementation, sensors 126 may include, cooperate with, or be realized as visible, low-light TV, infrared, lidar, or radar-type sensors that collect and/or process the data. In certain embodiments, for example, detection subsystem 108 and sensors 126 together form a millimeter-wave radar subsystem for system 100.

Other subsystems 112 may include a RAAS, which provides improved situational awareness to help lower the probability of runway incursions by providing timely aural advisories to the flight crew during taxi, takeoff, final approach, landing and rollout. The RAAS uses GPS data to determine aircraft position and compares aircraft position to airport location data stored in a navigation database. Based on these comparisons, the RAAS, if necessary, issues appropriate aural advisories. Aural advisories, which may be issued by the RAAS, notify the user 114 when the aircraft is approaching a runway, either on the ground or from the air at times such as when the aircraft has entered and is aligned with a runway, when the runway is not long enough for the particular aircraft, the distance remaining to the end of the runway as the aircraft is landing or during a rejected takeoff, when the user 114 inadvertently begins to take off from a taxiway, and when an aircraft has been immobile on a runway for an extended time. In practice, the features and characteristics of system 100 described here may be incorporated into a RAAS.

Other subsystems 112 may also include a navigation computer that allows the user 114 to program a flight plan from one destination to another. The navigation computer may be in operable communication with a flight director module that can be used to automatically fly, or assist the user 114 in flying, the programmed route. The navigation computer may be in operable communication with various databases including, for example, a terrain database, a navigation database, or template database 110. Processor architecture 104 may receive the programmed flight plan data from the navigation computer and retrieve an appropriate runway feature template from template database 110, based upon the flight plan data.

System 100, and processor architecture 104 in particular, can be operated during landing and approach operations of the host aircraft. In lieu of (or in addition to) visual confirmation by a member of the flight crew, system 100 can automatically and electronically confirm that a runway, an intended landing area, or a specific runway designated by the flight plan is on target. In practice, processor architecture 104 receives sensor data from detection subsystem 108, and extracts visually distinguishable features of the approach area from the sensor data. The extracted features are then fitted to a runway feature template, which may be generic or specified for the intended runway. The extent of matching of the extracted features to the runway feature template influences feedback that is generated for the flight crew.

To assist in the description of system 100, FIGS. 2-4 are simplified diagrams that depict different runways from the perspective of an approaching aircraft. Of course, system 100 can accommodate any number of runways, landing areas, airstrips, and the like, whether or not they are existing, known, and documented. FIG. 2 illustrates a runway 200, which represents the intended or desired approach runway for the aircraft, and another runway 202 that intersects runway 200. A number of visually distinguishable or identifiable environment features or characteristics of runways 200/202 can be represented in a corresponding runway feature template for runway 200. For example, such visually distinguishable features may include, without limitation: runway edges 204 of runway 200; runway edges 206 of runway 202; runway markings 208 (e.g., alphanumeric characters, symbols, guidelines, or the like) on runway 200; runway lighting components 210 for runway 200; runway lighting components 212 for runway 202; or the like. Of course, other detectable and comparable runway features may be leveraged by system 100, such as the general shape or layout of runway 200 (i.e., an area generally defined by two straight and parallel edges), the overall layout of a plurality of runways in an airport, or the like. Any or all of these distinguishable features can be represented in a suitable format in the corresponding runway feature template.

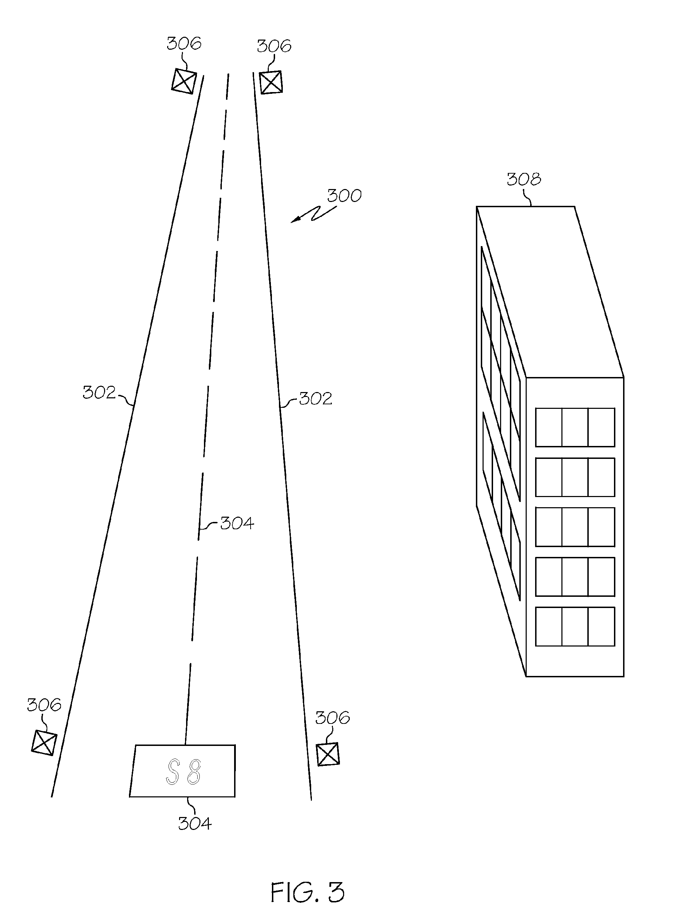

FIG. 3 illustrates a runway 300, which represents the intended or desired approach runway for the aircraft. As mentioned above, system 100 may be configured to detect and process visually distinguishable features of runway 300, such as runway edges 302 or runway markings 304. In FIG. 3, the four corners of runway 300 are associated with features, markings, and/or structures, referred to here as corner elements 306. System 100 may be designed to detect such corner elements 306 as indicators for runway 300. The landing area depicted in FIG. 3 also includes a building 308 in close proximity to runway 300. Building 308 may also serve as a visually distinguishable feature of runway 300. In other words, the corresponding runway feature template may contemplate the presence of building 308 and/or other structures relative to runway 300.

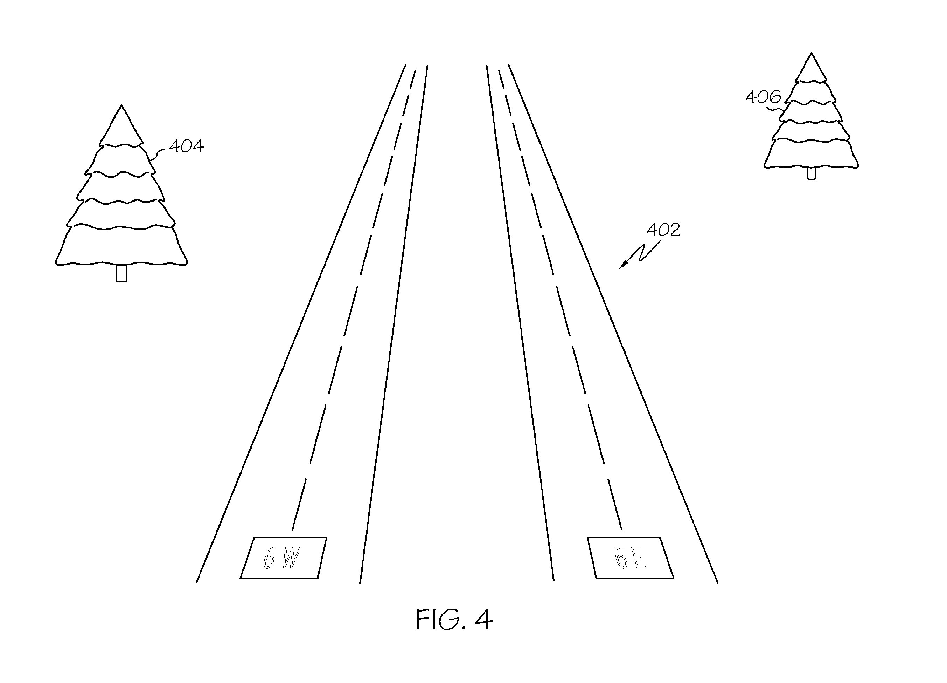

FIG. 4 illustrates a runway 400, which represents the intended or desired approach runway for the aircraft, and another runway 402 that is parallel and proximate to runway 400. Again, system 100 may use the edges, markings, and/or general characteristics of runway 400 as detectable cues. In addition, the overall layout of the landing area (two parallel and similar runways) may also serve as a visually distinguishable feature of runway 400 or runway 402. The landing area depicted in FIG. 4 also includes two trees 404/406 in close proximity to runway 300. One or both of these trees 404/406 308 may also serve as visually distinguishable features of runway 400 or runway 402. Thus, the corresponding runway feature template may contemplate the presence of landscaping features (such as trees 404/406) relative to runways 400/402.

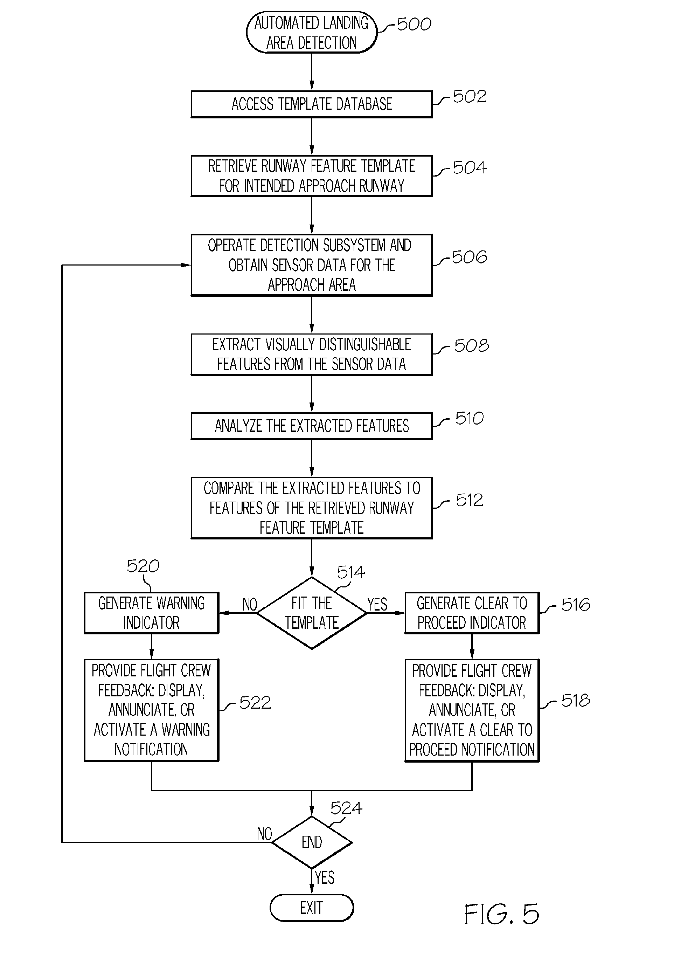

The operation of a system for detecting a landing area for an aircraft will now be described with reference to FIG. 5, which is a flow chart that illustrates an embodiment of an automated landing area detection process 500. The various tasks performed in connection with process 500 may be performed by software, hardware, firmware, or any combination thereof. For illustrative purposes, the following description of process 500 may refer to elements mentioned above in connection with FIGS. 1-4. In practice, portions of process 500 may be performed by different elements of the described system, e.g., a radar subsystem, a sensor, a processor architecture, or a suitably written application executed by an onboard computer system. It should be appreciated that process 500 may include any number of additional or alternative tasks, the tasks shown in FIG. 5 need not be performed in the illustrated order, and process 500 may be incorporated into a more comprehensive procedure or process having additional functionality not described in detail herein.

Process 500 assumes that the aircraft is flying in accordance with a predetermined flight plan, where the flight plan specifies a documented runway at a destination airport. Thus, process 500 may begin by accessing a template database (task 502) that contains a plurality of runway feature templates corresponding to a plurality of different documented runways. Such a template may be in the form of an image representing the runway features as if viewed from a camera. Alternatively, the template may contain information such as positions, height, or shape of the characteristic objects, which can be used to compare with sensor output in a three-dimensional format. As mentioned above, the template database can be populated with templates for any number of documented runways, airports, airstrips, landing areas, etc. Then, process 500 retrieves a particular runway feature template from the template database (task 504). In practice, task 504 will be influenced by the designated flight plan because the retrieved runway feature template will correspond to the intended approach runway for the aircraft.

As the aircraft approaches the designated runway, one or more detection subsystems are operated (task 506) to obtain sensor data that is indicative of an approach area of the aircraft. In one preferred embodiment, task 506 obtains millimeter-wave radar data from an onboard radar subsystem. This data may be conveyed in the form of received signal patterns corresponding to the approach area, the target runway, or the like. In practice, the detection subsystem may be active during flight and before the approach operation commences. Once the aircraft reaches a designated approach altitude, such as 200 feet, the sensor data from the detection subsystem can be processed to support the automated visual confirmation technique described here. In this regard, process 500 may extract certain visually distinguishable features from the sensor data (task 508). During task 508 the system may employ techniques and algorithms such as vertex based template matching, active edge analysis, edge fitting, curve fitting, and/or modified hough to extract and identify the visually distinguishable features.

Process 500 can then analyze and process the extracted features (task 510) in an appropriate manner to automatically confirm the presence of the intended runway. More particularly, characteristics of the extracted visually distinguishable features can be compared (task 512) to one or more environment features associated with the desired landing area for the aircraft (e.g., features of the runway itself, discernable or detectable features proximate the runway, or the like). In practice, these environment features can be represented by data stored in an onboard database of stored variables corresponding to the coordinate position of the runway ends, the number or alphanumeric identity of the runway, approach lights, nearby topographic features, and the like. This comparison may be accomplished by fitting the visually distinguishable features to the retrieved runway feature template. In alternate embodiments, the comparison may be accomplished by fitting the features to a generic runway feature template. In a practical deployment, the destination runway data can be retrieved from the flight plan stored onboard the aircraft. When the destination runway is selected, physical attributes associated with that particular runway are retrieved from the onboard database (or, alternatively, provided by an external source via a suitable data communication methodology such as ATC Datalink). The physical attribute data may indicate, for example, the width, length, runway type lighting, and location of the destination runway. These parameters are used to help direct and constrain the search area for the onboard automation associated with detection, extraction, and confirmation of the runway features of interest.

A practical implementation of process 500 may determine the extent of matching between the detected distinguishable features and the features included in the particular runway template, and evaluate the extent of matching relative to a matching threshold, matching criteria, set of matching conditions, or the like. If the fitting of the extracted features satisfies a threshold confidence criteria or level, then process 500 may indicate that a sufficient fit or match has been achieved. If the fitting of the extracted features fails to satisfy the threshold confidence criteria or level, then process 500 may indicate that a fit or a match has not been achieved.

If the extracted features fit the template, i.e., the extracted features are indicative of the intended landing area or runway (query task 514), then the system can generate an appropriate form of feedback for the flight crew. For example, process 500 may generate a clear-to-proceed indicator (task 516) and provide corresponding feedback to the flight crew (task 518) that confirms to the flight crew that the system has detected the intended landing area or runway. The feedback may be any suitable clear-to-proceed notification, such as, without limitation: a visual display; an indicator light; an audible annunciation; a mechanically actuated flag; or the like. Alternatively, process 500 may generate no feedback as the clear-to-proceed notification. In other words, silence during approach may mean that it is clear to proceed.

If, on the other hand, the extracted features do not fit the template, i.e., the extracted features are not indicative of the intended landing area of runway (query task 514), then the system may generate a warning indicator (task 520) and provide corresponding feedback to the flight crew (task 522) that confirms to the flight crew that the system has not yet detected the intended landing area or runway. The feedback may be any suitable warning notification, such as, without limitation: a displayed message; an indicator light; an audible alarm or alert; a mechanically actuated flag; or the like.

In practice, process 500 may be continuously performed or updated as needed. If process 500 is complete (query task 524) then it can exit or terminate. This might occur after visual detection of the runway has been obtained, or after the aircraft has landed. If process 500 is not complete, then it may be re-entered at an appropriate point, such as task 506. This allows process 500 to continue with updated sensor data as needed.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method (500) for detecting a landing area for an aircraft, the method (500) comprising:
obtaining (506) sensor data indicative of an approach area of the aircraft;
extracting (508) distinguishable features of the approach area from the sensor data;
comparing (512) characteristics of the distinguishable features to one or more environment features associated with a desired landing area for the aircraft; and
providing (518, 522) flight crew feedback in response to the comparing step.

2. The method (500) of claim 1, wherein providing (518, 522) flight crew feedback comprises:
in response to the comparing step (512), determining (514) that the distinguishable features are indicative of the desired landing area for the aircraft; and
thereafter generating (518) a clear-to-proceed indicator.

3. The method (500) of claim 1, wherein providing (518, 522) flight crew feedback comprises:
in response to the comparing step (512), determining (514) that the distinguishable features are not indicative of the desired landing area for the aircraft; and
thereafter generating (522) a warning indicator.

4. The method (500) of claim 1, wherein the one or more environment features comprise one or more runway features.

5. The method (500) of claim 1, wherein comparing (512) characteristics comprises fitting the distinguishable features to a generic runway feature template.

6. A system (100) for detecting a landing area for an aircraft, the system (100) comprising:
an onboard detection subsystem (108) configured to obtain sensor data indicative of an approach area of the aircraft;
a processor architecture (104) coupled to the onboard detection subsystem (108), the processor architecture (104) being configured to:
receive the sensor data;
extract visually distinguishable features of the approach area from the sensor data; and
fit the visually distinguishable features to a runway feature template; and
a flight deck instrument (106) coupled to the processor architecture (104), the flight deck instrument (106) being configured to generate feedback that is influenced by the extent of matching of the visually distinguishable features to the runway feature template.

7. The system (100) of claim 6, the onboard detection subsystem (108) comprising a millimeter-wave radar subsystem.

8. The system (100) of claim 6, the flight deck instrument (106) being controlled to generate a clear-to-proceed indicator if the visually distinguishable features fit the runway feature template.

9. The system (100) of claim 6, the flight deck instrument (106) being controlled to generate a warning indicator if the visually distinguishable features do not fit the runway feature template.

10. The system (100) of claim 6, further comprising a template database (110) coupled to the processor architecture (104), the template database (110) containing a plurality of runway feature templates, each corresponding to a different runway.
